Europäisches Patentamt

European Patent Office

Office européen des brevets

(19)

(11) Veröffentlichungsnummer: **0 279 469 B1**

# (12) EUROPÄISCHE PATENTSCHRIFT

(45) Veröffentlichungstag der Patentschrift: **02.09.92**

(51) Int. Cl.5: **B09B 3/00**

(21) Anmeldenummer: **88102504.3**

(22) Anmeldetag: **20.02.88**

(54) **Anlage zur Entsorgung, Beseitigung und Aufarbeitung benutzter Ölfilter.**

(30) Priorität: **20.02.87 DE 3705391**

(43) Veröffentlichungstag der Anmeldung:
**24.08.88 Patentblatt 88/34**

(45) Bekanntmachung des Hinweises auf die
Patenterteilung:
**02.09.92 Patentblatt 92/36**

(84) Benannte Vertragsstaaten:
**AT BE CH DE ES FR GB IT LI NL SE**

(56) Entgegenhaltungen:
**DE-A- 3 621 836**
**US-A- 3 739 471**

(73) Patentinhaber: **FACTRON RECYCLING GmbH &
Co. Betriebs KG.
Industriestrasse 1
W-6981 Faulbach(DE)**

(72) Erfinder: **Armer, Rainer
Iglauer Strasse 6 e
W-8755 Alzenau(DE)**

(74) Vertreter: **Zinngrebe, Horst, Dr.rer.nat.
Saalbaustrasse 11
W-6100 Darmstadt(DE)**

## Beschreibung

Die Erfindung bezieht sich auf eine Anlage zur Entsorgung, Beseitigung und Aufarbeitung benutzter Ölfiltern die aus einem Gehäuse mit Boden, einem darin angeordneten Träger mit Filterpapier und Druckfedern bestehen.

Vornehmlich durch den Einsatz in Kraftfahrzeugen ist die Verwendung von Ölfiltern allgemein bekannt. Sie bestehen üblicherweise aus einem Gehäuse mit Boden, die zusammen einen Hohlkörper von etwa zylindrischer Gestalt ergeben. In diesem angeordnet befindet sich ein Träger, auf den das Filterpapier lose aufgesteckt oder auf andere Weise befestigt ist und der über Druckfedern im Inneren festgehalten wird. Die Benutzung geschieht in der Weise, daß über ein zentrisch im Boden befindliches Gewinde der Ölfilter an der entsprechenden Stelle der Fahrzeuges befestigt, dann das Öl über die Einlaßöffnung ins Innere der Filters gepreßt wird, dort das Filterpapier durchströmt und im gereinigten Zustand durch ebenfalls im Boden befindliche Öffnungen in den Motor zurückgelangt. Hierbei setzen sich auf dem Filterpapier die Verunreinigungen ab, so daß nach einer gewissen Zeit der Benutzung der Filter ausgetauscht und durch einen neuen ersetzt werden muß, um stets Durchsatz und Durchlässigkeit in dem erforderlichen Mindestmaß zu garantieren.

Die Beseitigung derartiger, in ihrem Inneren im allgemeinen noch eine gewisse Menge an Altöl aufweisenden Ölfilter stellt ein gravierendes Umweltproblem dar. Im Stande der Technik werden sie entweder einer Sondermülldeponie zugeführt oder als ganzes in einer Verbrennungsanlage verbrannt, wobei sich im letzteren Fall jedoch zusätzliche Schwierigkeiten dadurch ergeben, daß die aufgrund der Umweltvorschriften unbedingt vorzunehmende Wäsche der hierbei entstehenden Rauchgase sehr aufwendig, technisch kompliziert und deshalb kostentreibend ist.

Hiervon ausgehend hat sich die Erfindung die Schaffung einer Anlage zur Beseitigung benutzter Ölfilter zur Aufgabe gemacht.

Gelöst wird diese Aufgabe durch, die Merkmale des Anspruchs 1.

Der erfindungsgemäßen Anlage werden in einem Behälter eine größere Menge an Ölfiltern unterschiedlicher Größe zur Verwertung zugeführt. Sinn und Zweck der Zufuhrvorrichtung besteht dann darin, einen einzigen Ölfilter hieraus zu entnehmen, und an eine Positioniereinheit weiterzugeben. Dort wird der Ölfilter in seiner räumlichen Lagen erkannt und mit dem Boden, genauer mit seiner Mitte unabhängig von seiner Größe in eine definierte Position gebracht, so daß eine Schneidestation angreifen und den Boden abtrennen kann.

Kerngedanke der Erfindung ist die in unterschiedlichsten Größen anfallenden Ölfilter, deren Durchmesser von 70 bis 160 mm und deren Länge von 80 bis 300 mm variiert, aufzuarbeiten und in die einzelnen Bestandteile zu zerlegen. Die hierbei erhaltenen Komponenten, wie Blechteile, Altöl sowie Filterpapier können entweder auf unproblematische Weise beseitigt bzw. -so im Falle der Metallbestandteile- einer Wiederverwendung zugeführt werde. Hierzu ist von Vorteil, wenn die Blechteile wie Gehäuse, Träger und Druckfedern zur Volumenverkleinerung gepreßt werden. Der Boden ist hochwertiger Kernschrott. Das Altöl wird in Sammeltanks bis zur endgültigen Beseitigung gelagert. Das Filterpapier wird evtl. nach vorangegangener Austrocknung mit Hilfe einer Zentrifugenanlage in einem Verbrennungsofen zur Energiegewinnung genutzt.

Der entscheidende Vorteil der Erfindung besteht darin, daß durch die Anlage Filter unterschiedlicher Größe auf optimalste Weise beseitigt, entsorgt und überwiegend einer Wiederverwendung nach dem Recyclingprinzip zugeführt werden.

In einer besonders bevorzugten Ausführungsform ist eine zusätzliche Trennanlage vorgesehen, die zum Ablösen des Filterpapiers vom Träger eingesetzt wird.
Nach dem Abtrennen des Bodens zerfällt der Ölfilter sofort in die Einzelbestandteile Gehäuse, Boden, Druckfedern sowie Altöl. Lediglich das Filterpapier bleibt nach wie vor am Träger anhaften. Um auch hier das wertvolle Metall wiederverwendbar zur machen, kommt eine zusätzliche Trennanlage zur Anwendung, mit deren Hilfe das Filterpapier vom Träger abgelöst und getrennt wird. Im Ergebnis erhält man dann eine vollständige Zerlegung des benutzten Ölfilters in die einzelnen Bestandteile, die beispielsweise als hochwertiger Schrott einem Recycling zugeführt werden können.

Grundsätzlich bestehen im Rahmen der Erfindung unterschiedliche Realisierungsmöglichkeiten der einzelnen Bauteile der erfindungsgemäßen Anlage. Im folgenden werden ohne Einschränkung der Allgemeinheit besonders vorteilhafte Ausgestaltungen der Einzelelemente angegeben.

Zunächst werden für die Zufuhrvorrichtung im speziellen zwei relativ gegeneinander und eingangsseitig angeordnete Backen vorgeschlagen, die auf diese Weise einen Greifer bilden. Jede der Backen ist winkelförmig und hinsichtlich der jeweiligen Knicklinie relativ gegeneinander versetzt. Sinn und Zweck dieser Maßnahme ist, daß durch den auf diese Weise gebildeten Greifer trotz unterschiedlicher Größe und Lage nur ein einziger Filter aus dem angelieferten, ungeordneten Stapel entnommen wird. Selbstverständlich umfaßt dieser Greifer auch die Möglichkeit einer raumfesten und einer anderen, relativ hierzu beweglichen Backe.

Als Alternative hierzu wird eine andere Zufuhrvorrichtung angegeben, die im wesentlichen aus einem Bandförderer besteht, der Mitnehmer und in Bewegungsrichtung verlaufende Gleitschienen aufweist. Er wird so ausgerichtet, daß die angelieferten Filter in einem ungeordneten Stapel eingangsseitig zu liegen kommen. Hiervon ausgehend weist der Bandförderer eine bestimmte Neigung gegen die Horizontale auf, die vorzugsweise 60 Grad beträgt. Entscheidend ist, daß auf dem Bandförderer nach Innen weisende Schikanen angeordnet sind, die eine Öffnung definieren, durch sich die axialliegende Filter ungehindert bewegen können. Filter, die hingegen in anderen Positionen zu liegen kommen, werden über die Schikanen vom Bandförderer abgeworfen. Die derart ausgerichteten Filter werden der Positioniereinheit zugeführt und dort beispielsweise über einen Greifer erfaßt und nach oben/unten ausgerichtet. Prinzipiell gilt, daß die vorgeschlagenen Bandfördereinheiten mehrteilig ausbildbar sind, also eine Ausrichtung in verschiedenen sich hintereinander anschließenden Stufen möglich machen. Die abgeworfenen Filter fallen in den eingangsseitig am Bandförderer befindlichen Aufnahmebehälter zurück. Sinn und Zweck der Schikanen besteht darin, eine Öffnung mit einer solchen lichten Weise zu definieren, durch die nur axial ausgerichtete Filter gelangen können, die anderen werden mit Hilfe der Schikane vom Bandförderer abgeworfen.
Durch die vorgeschlagenen Maßnahmen ist sichergestellt, daß der Positioniereinheit nur axial ausgerichtete Filter zum Prüfen zugeführt werden.

In dem nächsten bereits der Positioniereinheit zuordenbaren Teil der Anlage wird der Ölfilter über den Greifer in eine schräggestellte Rinne abgelegt, durch Bewegung entlang der Rinne axial ausgerichtet und gleitet aufgrund der Schräglage bis in eine definierte Endposition. Hieran anschließend wird der Ölfilter durch radial aufeinander zu bewegliche Backen erfaßt, so daß unterschiedliche Durchmesser keine Rolle spielen. Im speziellen und ohne auf die Anwendung in der erfindungsgemäßen Anlage beschränkt zu sein, weist die Positioniereinheit eine Abtasteinrichtung auf, durch die der erfaßte Ölfilter stirnseitig abgetastet wird, um festzustellen, ob es sich um den Boden oder um die gegeüberliegende Stirnfläche des Gehäuses handelt. Die Erkennung erfolgt durch die mittig im Boden befindliche Einlaßöffnung, die sofern nicht aufgefunden, ein Drehen des Filters um 180 Grad auslöst. Am Ausgang der Positioniereinheit erhält man dann den Boden des Ölfilters in einer definierten Position, so daß die Schneidestation dann in Funktion treten kann. Aufgabe der Positioniereinheit ist die Erfassung und Mittenzentrierung des Filters sowie die Überprüfung der Bodenlage durch Abtastung. Durch berührungslose Endschalter wird die evtl.

erforderlich werdende Drehung um 180 Grad vorgenommen, mit deren Hilfe die Bearbeitungsposition für die nachfolgende Schneidestation festgestellt und erhalten wird.

Aus der Vielzahl der Möglichkeiten der Realisierung der Abtastung (optisch, mechanisch) wird im besonderen die Verwendung eines pneumatisch bewegbaren Tasters mit entsprechenden Schaltern insbesondere aus Kostengründen als zweckmäßig vorgeschlagen.

In der auf diese Weise erhaltenen definierten Endlage des Bodens des Ölfilters wird nunmehr über eine Schneidestation der Boden vom Gehäuse getrennt. Im speziellen und unter ausdrücklichem Hinweis auf anderweitige Verwendungsmöglichkeiten wird hierzu eine Schneidestation vorgeschlagen, die aus mehreren, vorzugsweise angetriebenen und in radialer Richtung auf das Gehäuse im Bereich des Bodens zu bewegbaren Messern besteht. Durch die radiale Bewegung wird auch bei Unrundheit des Ölfilters ein präzises Schneiden und rasche Abtrennung möglich. Weiter können Rollen zur Verbesserung der Führung insbesondere einzeln aufgehängt sein, um einen möglichen Ausgleich bei deformierten Gehäusen zu erreichen.

Nach dem Abtrennen des Bodens erhält man als Ergebnis das Gehäuse, den Boden und, sofern während der Abtrennung des Bodens dieser unterhalb des Gehäuses angeordnet ist, mit dessen Beseitigung ein Herausfallen des Trägers und des darauf angeordneten Filterpapiers sowie die Druckfedern als einzelne Komponenten. Neben dem hierbei anfallenden Altöl wird das Gehäuse i.d.R. durch Verpressen komprimiert und ebenso wie der Boden, der wertvollen Kernschrott darstellt, einer Wiederverwendung zugeführt. Gleiches gilt für die im allgemeinen zusätzlich anfallenden Druckfedern. Im Regelfall ist das Filterpapier noch am Träger befestigt.

Eine wesentliche diesbezügliche Verbesserung erhält man durch die weiter vorgeschlagene Verwendung einer Trennanlage, durch die das Filterpapier vom Träger abgezogen, der Träger aus Blech einer Wiederverwendung zugeführt und das Filterpapier evtl. nach Abtrennen des daran haftenden Altöles durch Zentrifugieren odgl. verbrannt und zur Gewinnung von Wärmeenergie genutzt wird. Diese Trennanlage kann im speziellen aus rotierenden Krallen oder Bürsten mit Abstreifern bestehend, in die der Träger mit dem daran haftenden Filterpapier einfällt, durch die Rotation der Krallen oder Bürsten das Filterpapier vom Träger entfernt und von diesem wiederum durch Abstreifer abgelöst wird. Als Ergebnis der Trennanlage erhält man das Filterpapier und hiervon getrennt die Träger. Im Hinblick auf gerade diese Trennung ist von Vorteil, diese Krallen oder Borsten als Transportschnecke auszubilden, in denen durch spiralförmige Anordnung bei motorischem Antrieb ein Transport der Träger erfolgt, so daß am Ende der Trennanlage der vom Filterpapier gereinigte Träger erhalten und sofort einer Wiederverwendung zugeführt werden kann. Das Filterpapier wird über entsprechende Abstreifvorrichtungen aufgesammelt, von Krallen oder Bürsten entfernt und nach möglicherweise Abtrennen des Altöles verbrannt oder als Altpapier einer Wiederverwertung zugeführt.

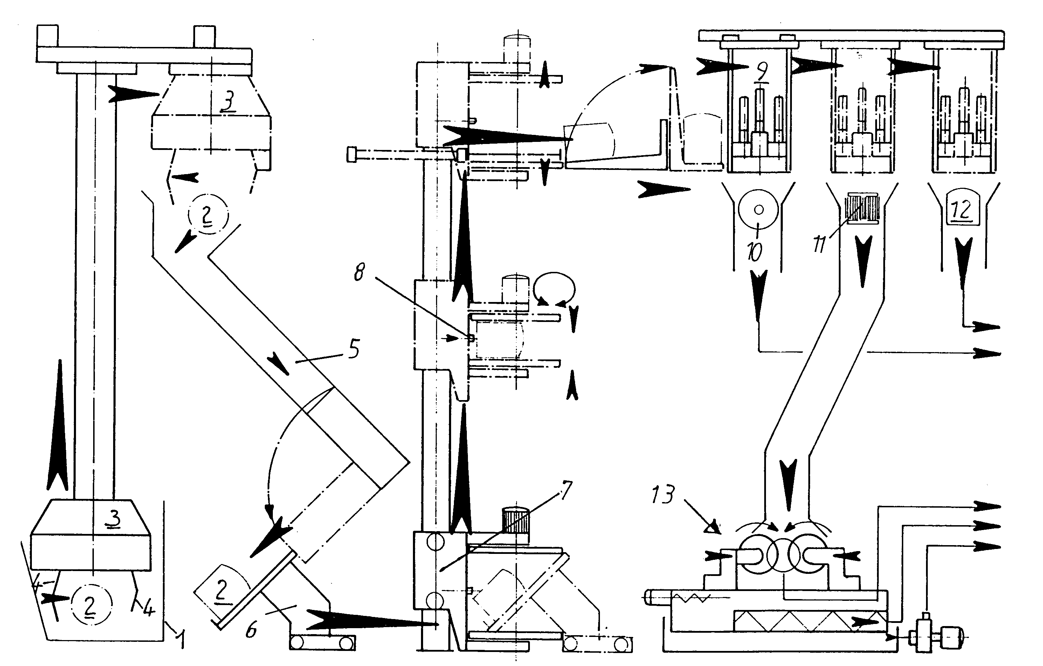

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird. Sie zeigt in schematischer Darstellung eine derartige Anlage.

In der Zeichnung ist nach Art eines Fließschemas und unter prinzipienhafter Wiedergabe der einzelnen Elemente eine erfindungsgemäße Anlage dargestellt. In einem Behältnis 1 befindet sich eine größere Anzahl an Ölfiltern 2. Über einen bewegbaren Greifer 3, an dessen unterem Ende sich zwei relativ gegeneinander bewegbare und winkelförmige geformte Backen 4 befinden, wird stets ein einzelner Ölfilter 2 aufgrund des relativ gegeneinander erfolgten Versatzes der Knicklinie der beiden Backen 4 sowie des ausgeübten Druckes erfaßt.

Der Greifer 3 bewegt sich dann nach oben, verschwenkt und gibt den Ölfilter 2 oberhalb einer Rinne 5 frei, durch die ein axiales Ausrichten des Ölfilters 2 beim Herunterrutschen bis in die untere Endposition erfolgt. Von dort wird über entsprechende Transportmittel 6 der Ölfilter 2 und zwar axial ausgerichtete zwischen eine aus zwei aufeinander zu bewegbaren Elementen bestehende Klemmvorrichtung 7 erfaßt. Hierdurch erhält man die Mitte der Stirnseiten des Ölfilters 2 stets in ein- und derselben Position, in der sich ein Taster 8 befindet. Stellt dieser fest, daß sich im Ölfilter keine Öffnung, die die Einlaßöffnung darstellt, befindet, wird er um 180 Grad gedreht, so daß der Boden 10 des Ölfilters 2 in eine definierte Position gebracht wird.

Von dort wird er einer Schneidestation 9 zugeführt. In ihr erfolgt über in radiale Richtung bewegte Messer ein Abtrennen des Bodens 10 vom Gehäuse 12, der nach unten in einen entsprechenden Sammelbehälter fällt, wo er als wertvoller Kernschrott der Wiederverwendung zugeführt wird. Anschließend fällt der Träger 11 mit dem darauf befindlichen Filterpapier aus dem Gehäuse 12 heraus und wird, wie durch die Pfeile angegeben, einer Trennanlage 13 zugeführt. Das verbleibende Gehäuse 12 kann als Blech unmittelbar wiederverwendet werden oder durch Pressen kompaktiert und in dieser Form aufbewahrt bzw. abtransportiert werden.

Die Trennanlage 13 besteht aus zwei im Abstand zueinander angeordneten walzenförmigen Bürsten 14, die den Träger 11 mit dem darauf befindlichen Filterpapier erfassen und einerseits das Filterpapier ablösen und durch die schneckenartige Ausbildung einen Transport des Trägers vornehmen, so daß endseitig die Träger angesammelt werden, das Filterpapier hiervon getrennt anfällt und das hierbei noch freigesetzte Altöl aufgesammelt wird. Das im allgemeinen nocht mit Öl getränkte Filterpapier kann entweder unmittelbar verbrannt oder noch einer weiteren, der Trennung des Altöles vom Papier dienenden Behandlung unterzogen werden.

Im Ergebnis erhält man durch die erfindungsgemäße Anlage eine vollständige Trennung in einzelne Komponenten, die als wertvolles Rohmaterial, wie z.B. Blech, Kernschrott und dgl. einer Wiedervorrichtung zugeführt werden können und insbesondere im Falle des Filterpapieres ohne Probleme und umweltfreundlich beseitigbar sind. Die erfindunsgemäße Anlage erlaubt eine optimale Entsorgung und Beseitigung benutzter Ölfilter dadurch, daß die entweder (überwiegend) einer Aufarbeitung und Wiederverwendung zugeführt oder problemlos beseitigt werden können.

**Patentansprüche**

1. Anlage zur Entsorgung, Beseitigung und Aufarbeitung benutzter Ölfilter (2), die aus einem Gehäuse (12) mit Boden (10), einem darin angeordneten Träger (11) mit Filterpapier und Druckfedern bestehen, gekennzeichnet durch eine Zufuhrvorrichtung, welche die Ölfilter (2) einzeln erfaßt, eine, axial ausgerichtete Ölfilter (2) einzeln aufnehmende Positioniereinheit, welche die Ölfilter (2) mittels eines Tasters (8) stirnseitig abtastet und gegebenenfalls dreht, sowie durch eine Schneidstation (9), die mittels bewegter Messer den Boden (2) vom Gehäuse (12) trennt.

2. Anlage nach Anspruch 1, dadurch gekennzeichnet, daß zusätzlich eine Trennanlage (13) für das Ablösen des Filterpapiers vom Träger (11) vorhanden ist.

3. Anlage nach Anspruch 1 oder 2, dadurch gekennzeichnet, daß die Zuführvorrichtung einen eingangsseitig angeordneten, aus zwei relativ gegeneinander bewegbaren Backen (4) bestehenden Greifer (3) aufweist, dessen Backen (4) winkelförmig und in ihrer Knicklinie relativ gegeneinander versetzt sind.

4. Anlage nach einem der vorstehenden Ansprüche 1 oder 2, dadurch gekennzeichnet, daß die Zuführvorrichtung einen Bandförderer aufweist, der Mitnehmer und seitlich in Bewegungsrichtung verlaufende Gleitschienen besitzt, in einem bestimmten Winkel, vorzugsweise von 60°, gegen die Horizontale geneigt ist und auf dem nach innen weisende Schikanen angeordnet sind derart, daß nur axial liegende Filter ungehindert passieren.

5. Anlage nach einem der vorstehenden Ansprüche, dadurch gekennzeichnet, daß der vorzugsweise pneumatisch bewegbare Taster (8) auf eine im Boden (10) mittig angeordnete Einlaßöffnung ausgerichtet ist.

6. Anlage nach einem der vorstehenden Ansprüche, dadurch gekennzeichnet, daß die Positioniereinheit eine Rinne (5) aufweist, an deren unterer Endposition eine Klemmvorrichtung (7) mit radial aufeinander zu beweglichen Elementen für den Ölfilter vorgesehen ist.

7. Anlage nach einem der Ansprüche 2 bis 6, dadurch gekennzeichnet, daß die Trennanlage (13) rotierende Krallen oder Bürsten (14) mit Abstreifern aufweist.

8. Anlage nach Anspruch 7, gekennzeichnet durch als Transportschnecke ausgebildete Krallen oder Bürsten (14).

## Claims

1. Installation for disposing of, eliminating and recovering used oil filters (2) which comprise a casing (12) with a bottom (10), a carrier (11) disposed therein with filter paper and compression springs, characterised by a feed device which individually engages the oil filters (2), a positioning unit which individually receives axially directed oil filters (2) and which senses the oil filters (2) at the end by means of a sensor (8) and possibly rotates same, and a cutting station (9) which separates the bottom (10) from the casing (12) by means of moved blades.

2. Installation according to claim 1 characterised in that there is additionally provided a separating installation (13) for separating the filter paper from the carrier (11).

3. Installation according to claim 1 or claim 2 characterised in that the feed means has a gripper (3) which is arranged at the entry end and which comprises two jaws (4) which are movable relative to each other, the jaws (4) of the gripper (3) being of an angular configuration and being displaced relative to each other in respect of their bend line.

4. Installation according to one of preceding claims 1 and 2 characterised in that the feed device has a belt conveyor which has entrainment members and slide bars extending laterally in the direction of movement, which is inclined relative to the horizontal at a given angle, preferably 60°, and on which inwardly facing baffles are arranged in such a way that only axially disposed filters pass unimpededly.

5. Installation according to one of the preceding claims characterised in that the preferably pneumatically movable sensor (8) is aligned with an inlet opening arranged centrally in the bottom (10).

6. Installation according to one of the preceding claims characterised in that the positioning unit has a channel (5), at the lower end position of which is provided a clamping device (7) with elements which are movable radially towards each other, for the oil filter.

7. Installation according to one of claims 2 to 6 characterised in that the separating installation (13) has rotating claws or brushes (14) with strippers.

8. Installation according to claim 7 characterised by claws or brushes (14) in the form of a transportation screw.

## Revendications

1. Installation pour l'évacuation, l'élimination et le retraitement de filtres à huile usés (2) qui sont constitués d'un boîtier (12) avec fond (10), d'un support (11) disposé dans celui-ci avec papier filtre et ressorts à pression, caractérisée par un dispositif d'introduction qui saisit individuellement les filtres à huile (2), une unité de positionnement recevant individuellement des filtres à huile alignés axialement (2) qui analyse frontalement les filtres à huile (2) au moyen d'un palpeur (8) et les fait tourner le cas échéant, ainsi que par un poste de coupe (9) qui sépare le fond (2) du boîtier (12) au moyen de couteaux mobiles.

2. Installation selon la revendication 1, caractérisée en ce qu'est prévue en outre une installation de séparation (13) pour détacher le papier filtre du support (11).

3. Installation selon la revendication 1 ou 2, caractérisée en ce que le dispositif d'introduction présente un grappin (3) disposé du côté de l'entrée, constitué de deux mâchoires (4) mobiles l'une par rapport à l'autre, dont les mâchoires (4) sont en forme de coude et sont relativement décalées l'une par rapport à l'autre dans leur ligne de pliage.

4. Installation selon l'une des revendications précédentes 1 ou 2, caractérisée en ce que le dispositif d'introduction présente un transporteur à bande qui possède des taquets d'entraînement et latéralement des glissières situées dans le sens du déplacement, est incliné suivant un certain angle, de préférence de 60°, par rapport à l'horizontale et sur lequel des chicanes tournées vers l'intérieur sont disposées de telle façon que seuls les filtres situés axialement passent librement.

5. Installation selon l'une des revendications précédentes, caractérisée en ce que le palpeur de préférence mobile pneumatiquement (8) est aligné sur un orifice d'alimentation disposé au centre dans le fond (10).

6. Installation selon l'une des revendications précédentes, caractérisée en ce que l'unité de positionnement présente une rigole (5) à la position extrême inférieure de laquelle est prévu un dispositif de serrage (7) pour le filtre à huile avec des éléments mobiles radialement les uns vers les autres.

7. Installation selon l'une des revendications 2 à 6, caractérisée en ce que l'installation de séparation (13) présente des griffes ou des brosses rotatives (14) avec des racleurs.

8. Installation selon la revendication 7, caractérisée par des griffes ou des brosses (14) conçues comme une vis de transport.